# EUROPÄISCHE PATENTSCHRIFT

(11) **EP 3 898 352 B1**
(45) Veröffentlichungstag und Bekanntmachung des Hinweises auf die Patenterteilung: **11.10.2023**
(21) Anmeldenummer: 19829041.3
(22) Anmeldetag: 12.12.2019
(51) Int. Cl.: B60S 1/64, B60H 3/00, B60H 1/24, B60H 1/00, B60S 3/00

(54) **VERFAHREN ZUM REINIGEN EINES INNENRAUMS EINES FAHRZEUGS, SYSTEM, VERSORGUNGSVORRICHTUNG UND FAHRZEUG**
METHOD FOR CLEANING AN INTERIOR OF A VEHICLE, SYSTEM, SUPPLY DEVICE, AND VEHICLE
PROCÉDÉ DE NETTOYAGE D'UN HABITACLE D'UN VÉHICULE, SYSTÈME, DISPOSITIF D'ALIMENTATION ET VÉHICULE

(30) Priorität: 20.12.2018 DE 102018222653
(43) Veröffentlichungstag der Anmeldung: 27.10.2021
(73) Patentinhaber: VOLKSWAGEN AKTIENGESELLSCHAFT, 38440 Wolfsburg (DE)
(72) Erfinder: SCHÜTZ, Daniel, 38165 Lehre (DE); OTREMBA, Maik, 38118 Braunschweig (DE); HEROLD, Stephan, 38106 Braunschweig (DE); TORO RAMOS, Juan Mauricio, 38102 Braunschweig (DE); TOPPEL, Kristoph, 30173 Hannover (DE)
(86) Internationale Anmeldenummer: PCT/EP2019/084912
(87) Internationale Veröffentlichungsnummer: WO 2020/126826

(56) Entgegenhaltungen:
- EP-A1- 2 777 716
- WO-A2-2008/006035
- DE-A1- 2 208 374
- DE-A1-102017 206 232
- KR-B1- 100 761 940

## Beschreibung

Die Erfindung betrifft ein Verfahren zum Reinigen eines Innenraums eines Fahrzeugs, ein System, eine Versorgungsvorrichtung und ein Fahrzeug.

Der Innenraum eines Fahrzeugs verschmutzt mit fortschreitendem Gebrauch des Fahrzeugs. Hierbei sammeln sich insbesondere Staub und Schmutzpartikel auf Oberflächen in dem Innenraum des Fahrzeugs an und können sowohl ein Wohlbefinden als auch eine Gesundheit der Fahrzeuginsassen des Fahrzeugs beeinträchtigen. Dies ist insbesondere der Fall, wenn in dem Fahrzeug wechselnde Fahrzeuginsassen befördert werden, wie dies beispielsweise beim Carsharing der Fall ist.

Eine Reinigung des Innenraums des Fahrzeugs erfolgt in der Regel per Hand mittels eines Staubsaugers. Hierzu wird eine Ansaugdüse über Oberflächen im Innenraum geführt, vorhandener Staub und Schmutzpartikel werden weggesaugt und in einem Sammelbehälter aufgefangen. Dies ist zeitraubend und umständlich. Ferner sind Klimaanlagen bekannt, welche eine Luft in einem Innenraum des Fahrzeug reinigen können.

Aus der DE 10 2016 008 366 A1 ist eine Klimaanlage für ein Fahrzeug bekannt, mit mindestens einer Sensoreinheit, welche mindestens eine luftgüterelevante Größe einer Fahrzeuginnenraumluft erfasst, einer Auswerte- und Steuereinheit, welche die mindestens eine luftgüterelevante Größe der mindestens einen Sensoreinheit auswertet, und einer Luftreinigungsvorrichtung, welche die Innenraumluft des Fahrzeugs in einem Umluftbetrieb oder in einem Frischluftbetrieb oder in einem Mischluftbetrieb reinigt.

Aus der WO 2008/006035 A2 ist ein Verfahren zum Desinfizieren von Strukturen, Gebäuden, von Personen befahrbaren Fahrzeugen und anderen geschlossenen oder umschließbaren Räumen bekannt. Insbesondere betrifft die vorliegende Erfindung ein Verfahren zum Abtöten und/oder Entfernen von Schädlingen und ihren Allergenen, Bakterien, Viren, Pilzen, Schimmelpilzen, flüchtigen organischen Verbindungen und anderen gefährlichen Substanzen aus solchen Gehäusen.

Aus der KR 10 076 19 40 B1 ist ein automatisches Reinigungssystem für die Klimaanlage eines Fahrzeugs bekannt, um die Klimaanlage des Fahrzeugs und das Innere des Fahrzeugs schnell und automatisch zu reinigen, indem Innenluft und Staub des Fahrzeugs durch eine Vakuumsaugvorrichtung angesaugt werden.

Aus der DE 2 208 374 A1 sind Reinigungs-Einrichtungen oder Anlagen bekannt, wobei in Räumen, in den darin befindlichen Gegenständen in Ecken, an Flächen oder in Werkstoffen jeglicher Art Düsenrohre aus jeglichem Werkstoff montiert, eingebaut, angebaut, eingegossen oder eingearbeitet sind, wobei an den Düsenrohren Presslufteinrichtungen oder Pumpen, Absaugpumpen oder Absauggeräte durch Schlauchkupplungen angeschlossen sind und wobei mit den oder bekannt abgeänderten Mitteln durch Druck, Vakuum oder Spülung Reinigungen erfolgen oder vorgenommen werden und wobei mittels dieser Vorgänge Bazillen abgetötet und die Luft mit angenehmen und gesunden Riechstoffen angereichert wird.

Aus der EP 2 777 716 A1 sind Verfahren zur Dekontamination von Abteilen wie Flugzeugkabinen und anderen Arten von Abteilen sowie Systeme zur Implementierung dieser Verfahren bekannt. In einigen Aspekten umfasst ein Verfahren das Erfassen des Vorhandenseins einer oder mehrerer Verunreinigungen in einem Abteil. Diese Informationen werden verwendet, um verschiedene Dekontaminationsbedingungen auszuwählen. In einigen Aspekten können zusätzliche Informationen, wie der Typ des Abteils (z. B. einer Flugzeugkabine), die Temperatur und die Luftfeuchtigkeit, bei der Auswahl der Dekontaminationsbedingungen ebenfalls berücksichtigt werden. Die Dekontaminationsbedingungen umfassen die Identifizierung eines oder mehrerer Dekontaminationsmittel, die in das Abteil abgegeben werden sollen, das Temperaturprofil der Luft, die in das Abteil abgegeben werden soll, und den Zeitpunkt der Dekontaminationsabgabe und des Luftströmungsvorgangs. Diese Bedingungen werden ausgewählt, um die Wirksamkeit der ausgewählten Dekontaminationsmittel in Bezug auf die eine oder mehreren nachgewiesenen Verunreinigungen zu erhöhen und die Auswirkungen auf den Flugzeugraum zu verringern.

Aus der DE 10 2017 206 232 A1 ist ein Reinigungssystem für einen Innenraum eines Fahrzeugs bekannt, wobei das Reinigungssystem dazu eingerichtet ist, ein Reinigungsmedium in den Innenraum des Fahrzeugs einzubringen, aufweisend eine Zuleitungseinrichtung, wobei die Zuleitungseinrichtung dazu eingerichtet ist, das Reinigungsmedium bereitzustellen, eine Düsenanordnung, welche dazu eingerichtet ist, das Reinigungsmedium, welches von der Zuleitungseinrichtung bereitstellbar ist, in den Innenraum des Fahrzeugs einzubringen und eine Steuereinheit, wobei die Steuereinheit dazu eingerichtet ist, einen automatisierten Reinigungsvorgang des Innenraums des Fahrzeugs durch ein Ansteuern der Zuleitungseinrichtung und/oder der Düsenanordnung in Abhängigkeit eines Fahrzeugzustands zu steuern.

Der Erfindung liegt die Aufgabe zu Grunde, ein Verfahren zum Reinigen eines Innenraums eines Fahrzeugs und ein Fahrzeug zu schaffen, bei denen ein Reinigen des Innenraums verbessert durchgeführt werden kann.

Die Aufgabe wird erfindungsgemäß durch ein Verfahren mit den Merkmalen des Patentanspruchs 1 und ein Fahrzeug mit den Merkmalen des Patentanspruchs 6 gelöst. Vorteilhafte Ausgestaltungen der Erfindung ergeben sich aus den Unteransprüchen.

Insbesondere wird ein Verfahren zum Reinigen eines Innenraums eines Fahrzeugs zur Verfügung gestellt, umfassend die folgenden Schritte: Einlassen von Luft, beispielsweise durch Einblasen von Luft, in den Innenraum mittels mindestens einer Lufteinlasseinrichtung mit mindestens einem Lufteinlass, Absaugen der eingeblasenen Luft aus dem Innenraum mittels mindestens einer Luftabsaugeinrichtung mit mindestens einem Luftauslass, sodass Schmutzpartikel und/oder Staub aus dem Innenraum des Fahrzeugs durch den mindestens einen Luftauslass hindurch mittels eines Luftstroms entfernt werden.

Ferner wird ein Fahrzeug geschaffen, umfassend eine Lufteinlasseinrichtung mit mindestens einem Lufteinlass zum Einblasen von Luft in einen Innenraum des Fahrzeugs, eine Luftabsaugeinrichtung mit mindestens einem Luftauslass zum Absaugen von Luft aus dem Innenraum des Fahrzeugs, wobei die Lufteinlasseinrichtung und die Luftabsaugeinrichtung derart ausgebildet sind, dass durch Einblasen und Absaugen von Luft Schmutzpartikel und/oder Staub aus dem Innenraum des Fahrzeugs durch den mindestens einen Luftauslass hindurch mittels eines Luftstroms entfernt werden können.

Es ist einer der Grundgedanken der Erfindung, ein Fahrzeug mit einer Lufteinlasseinrichtung mit mindestens einem Lufteinlass und einer Luftabsaugeinrichtung mit mindestens einem Luftauslass auszustatten. Zum Reinigen wird Luft durch den mindestens einen Lufteinlass in den Innenraum des Fahrzeugs eingeblasen, durch den mindestens einen Luftauslass wird Luft aus dem Innenraum des Fahrzeugs abgesaugt. Dies erfolgt insbesondere mittels einer Strömungsmaschine, welche als Ventilator oder als Verdichter ausgebildet sein kann. Alternativ kann auch Druckluft verwendet werden, um die Luft in den Innenraum einzublasen. Eine Stärke des Einblasens und eine Stärke des Absaugens werden hierbei derart gewählt, dass ein hierdurch erzeugter Luftstrom zu einem Aufwirbeln von Schmutzpartikeln und Staub im Innenraum des Fahrzeugs führt. Die aufgewirbelten Schmutzpartikel und der aufgewirbelte Staub werden mittels des erzeugten Luftstroms zu dem mindestens einen Auslass transportiert und verlassen dort über den Auslass den Innenraum. Der Innenraum kann hierdurch von Schmutzpartikeln und/oder Staub befreit werden.

Wenn im Zusammenhang mit der Erfindung stets nur eine Verwendung von Luft beschrieben ist, so sollen hiervon auch andere Gase oder Gasmischungen umfasst sein, welche zum Reinigen verwendet werden können. Insbesondere kann vorgesehen sein, die Luft mit mindestens einem Zusatzstoff zu versehen, beispielsweise mit einem Desinfektionsmittel, mit einem Reinigungsmittel, mit einem duftbindenden Stoff oder mit einem Duftstoff.

Eine Anordnung und/oder eine Orientierung des mindestens einen Lufteinlasses und des mindestens einen Luftauslasses sind hierbei insbesondere derart gewählt, dass ein Reinigen effizient ausgeführt werden kann.

Erfindungsgemäß ist vorgesehen, einen Luftstrom zumindest zeitweise ausschließlich in bestimmte Bereiche des Innenraums des Fahrzeugs zu leiten. Hierfür kann vorgesehen sein, mehrere im Innenraum angeordnete Lufteinlässe und/oder Luftauslässe jeweils nur zeitweise zu betreiben, so dass der Luftstrom schrittweise durch den Innenraum des Fahrzeugs bewegt werden kann. Es ist vorgesehen, dass die Lufteinlässe und/oder Luftauslässe richtungsabhängig betrieben werden, beispielsweise indem diese mittels Luftleitschürzen und/oder bewegbaren Düsen etc. einen jeweiligen Luftstrom leiten können. Einfach ausgedrückt wird hierdurch erreicht, dass Schmutzpartikel und/oder Staub durch den Innenraum hindurch gezielt auf den mindestens einen Auslass hingetrieben werden, sodass das Reinigen effizienter durchgeführt werden kann. Hierbei kann beispielsweise vorgesehen sein, einen Strahl oder eine Wand aus Luft durch den Innenraum hindurchzutreiben und hierdurch die Schmutzpartikel und/oder den Staub zu lösen und gezielt von einem Bereich des Innenraums zu einem anderen Bereich des Innenraums zu treiben.

Es kann vorgesehen sein, dass der Innenraum und/oder Oberflächen des Fahrzeugs zum Reinigen optimiert sind, beispielsweise indem diese zum Leiten des Luftstroms und/oder für ein verbessertes Ablösen und/oder Aufwirbeln von Schmutzpartikeln und/oder Staub ausgebildet sind.

Beim Reinigen können sowohl laminare als auch turbulente Effekte ausgenutzt werden, um Schmutzpartikel und/oder Staub von Oberflächen zu lösen und/oder zu transportieren. Es kann auch vorgesehen sein, abwechselnd einen laminaren und einen turbulenten Luftstrom auszubilden, beispielsweise indem über den mindestens einen Lufteinlass ein entsprechender Luftstrom eingeblasen wird und/oder indem der mindestens eine Luftauslass mit einer entsprechenden Absaugleistung betrieben wird.

Es kann vorgesehen sein, während des Reinigens eine Entlüftungsklappe des Fahrzeugs zu schließen, um den erzeugten Luftstrom ausschließlich über den mindestens einen Auslass auszuleiten.

Während des Reinigungsvorgangs werden die Lufteinlasseinrichtung und die Luftabsaugeinrichtung insbesondere von einer Steuerung gesteuert bzw. geregelt. Die Steuerung kann auch als Teil einer Fahrzeugsteuerung oder einer Klimaanlagensteuerung des Fahrzeugs ausgebildet sein.

In einer Ausführungsform ist vorgesehen, dass das Einblasen und/oder das Absaugen in gepulster Form erfolgen. Hierdurch kann erreicht werden, dass Schmutzpartikel und/oder Staub verbessert aus dem Innenraum entfernt werden können.

In einer weiteren Ausführungsform ist vorgesehen, dass das Einblasen und das Absaugen zeitversetzt erfolgen und/oder dass eine Stärke des Einblasens und/oder eine Stärke des Absaugens während des Reinigens verändert wird. Hierdurch kann erreicht werden, dass Schmutzpartikel und/oder Staub verbessert, insbesondere effizienter, aus dem Innenraum entfernt werden können. So kann vorgesehen sein, Schmutzpartikel und/oder Staub durch abwechselndes Einblasen und Absaugen oder durch eine unterschiedliche Stärke des erzeugten Luftstroms erst aufzuwirbeln und dann abzusaugen.

In einer Ausführungsform ist vorgesehen, dass zum Reinigen eine Verbindung zwischen dem Fahrzeug und mindestens einer außerhalb des Fahrzeugs angeordneten Strömungsmaschine mittels zumindest einer Koppelschnittstelle hergestellt wird und der Luftstrom mittels der mindestens einen außerhalb des Fahrzeugs angeordneten Strömungsmaschine erzeugt wird. Hierdurch können die Lufteinlasseinrichtung und die Luftabsaugeinrichtung im Fahrzeug selbst einfach und kompakt und daher kostengünstig ausgebildet werden, da diese selbst keine Strömungsmaschinen umfassen müssen. Der Luftstrom wird dann ausschließlich von der mindestens einen externen Strömungsmaschine bereitgestellt. Die mindestens eine Strömungsmaschine kann beispielsweise in einem Servicezentrum bereitgestellt werden, in das das Fahrzeug zum Reinigen gebracht wird. Die zumindest eine Koppelschnittstelle ist beispielsweise als Steck-, Rast- oder Schraubverbindung ausgebildet, welche ein schnelles Verbinden und Lösen der Verbindung ermöglicht.

Alternativ zur Strömungsmaschine kann Luft zum Einblasen auch mittels Druckluft bereitgestellt werden. Hierzu kann in dem Fahrzeug oder alternativ außerhalb des Fahrzeugs ein Drucklufttank und/oder ein Druckluftkompressor vorgesehen sein.

In einer weiterbildenden Ausführungsform ist vorgesehen, dass die Verbindung automatisiert mittels eines Roboters hergestellt und/oder nach dem Reinigen wieder gelöst wird. Beispielweise kann ein Servicezentrum vorgesehen sein, in dem ein Fahrzeug vollautomatisiert gereinigt werden kann. Das zu reinigende Fahrzeug fährt, insbesondere automatisiert, zum Reinigen in das Servicezentrum. Dort wird jeweils eine Strömungsmaschine über die Kopplungsschnittstellen mit der Lufteinlasseinrichtung bzw. mit der Luftabsaugeinrichtung verbunden, sodass die eine Strömungsmaschine Luft über den mindestens einen Lufteinlass in das Fahrzeug einblasen kann und die andere Strömungsmaschine die eingeblasene Luft über den mindestens einen Luftauslass absaugen kann. Das Verbinden erfolgt hierbei vollautomatisiert, indem der Roboter mittels eines Führungsarms die jeweiligen Kopplungsschnittstellen miteinander verbindet. Ein vollautomatisiertes Reinigen des Innenraums des Fahrzeugs wird hierdurch ermöglicht. Insbesondere im Carsharing oder in zukünftigen, automatisiert gefahrenen Taxis kann daher eine automatisierte und kostengünstige Reinigung von Fahrzeugen durchgeführt werden.

In einer Ausführungsform des Fahrzeugs ist vorgesehen, dass zumindest ein Lufteinlass und/oder zumindest ein Luftauslass in einem Ablagefach oder an einer Ablagefläche oder einer Schmutzsammelstelle des Fahrzeugs angeordnet sind. Dies ermöglicht es, gezielt einen Luftstrom in Bereichen hervorzurufen, an denen sich Schmutzpartikel und/oder Staub vermehrt ansammeln. Typische Schmutzsammelstellen sind beispielsweise Sitzfalten oder die tiefsten Stellen auf einem Sitzkissen eines Fahrzeugsitzes. Auch auf Fußmatten können Bereiche vorgesehen sein, die mit einem Lufteinlass bzw. einem Luftauslass versehen sind.

In einer Ausführungsform des Fahrzeugs ist vorgesehen, dass die Lufteinlasseinrichtung und die Luftabsaugeinrichtung jeweils mindestens eine Strömungsmaschine umfassen. Einfach ausgedrückt handelt es sich bei der Strömungsmaschine um einen Ventilator oder um einen Verdichter, je nachdem, wie leistungsstark die Strömungsmaschine im Einzelfall ausgebildet ist.

In einer weiteren Ausführungsform des Fahrzeugs ist vorgesehen, dass die Lufteinlasseinrichtung und/oder die Luftabsaugeinrichtung Koppelschnittstellen aufweisen, wobei die Koppelschnittstellen derart ausgebildet sind, dass zum Reinigen eine Verbindung zwischen dem Fahrzeug und mindestens einer außerhalb des Fahrzeugs angeordneten Strömungsmaschine hergestellt werden kann. Die Koppelschnittstellen sind beispielsweise als Steck-, Rast- oder Schraubverbindungen ausgebildet, welche ein schnelles Verbinden und Lösen der Verbindung ermöglichen.

In diesem Zusammenhang wird ferner eine Versorgungsvorrichtung geschaffen, umfassend mindestens eine Strömungsmaschine, wobei die Versorgungsvorrichtung mindestens eine Koppelschnittstelle aufweist, die derart ausgebildet ist, dass diese die mindestens eine Strömungsmaschine zum Reinigen eines Innenraums eines Fahrzeugs gemäß einer der beschriebenen Ausführungsformen mit den Koppelschnittstellen der Lufteinlasseinrichtung und/oder der Luftabsaugeinrichtung des Fahrzeugs verbunden werden kann.

Hierdurch wird ein System zum Reinigen eines Innenraums eines Fahrzeugs geschaffen, umfassend ein Fahrzeug oder zumindest ein Fahrzeugteil gemäß einer der beschriebenen Ausführungsformen und mindestens eine Versorgungsvorrichtung gemäß der beschriebenen Ausführungsform, wobei die mindestens eine Versorgungsvorrichtung über die mindestens eine Koppelschnittstelle mit den Koppelschnittstellen der Lufteinlasseinrichtung und/oder der Absaugeinrichtung verbunden ist. Es wird demnach ein Reinigungssystem bereitgestellt.

In einer Ausführungsform des Systems umfasst das System einen Roboter, wobei der Roboter Führungsmittel aufweist, wobei die Führungsmittel derart ausgebildet sind, eine Verbindung der Koppelschnittstellen automatisiert herstellen und/oder nach dem Reinigen wieder lösen zu können. Die Führungsmittel können beispielsweise als Führungsarme ausgebildet sein, welche die Koppelschnittstellen der Versorgungseinrichtung mit den jeweiligen Koppelschnittstellen der Lufteinlasseinrichtung bzw. der Luftabsaugeinrichtung automatisiert verbinden.

Nachfolgend wird die Erfindung anhand bevorzugter Ausführungsbeispiele unter Bezugnahme auf die Figuren näher erläutert. Hierbei zeigen:
- Fig. 1: eine schematische Darstellung einer Ausführungsform des Fahrzeugs;
- Fig. 2: eine schematische Darstellung einer Ausführungsform des Systems zum Reinigen eines Innenraums eines Fahrzeugs; und
- Fig. 3: ein schematisches Ablaufdiagramm einer Ausführungsform des Verfahrens zum Reinigen eines Innenraums eines Fahrzeugs.

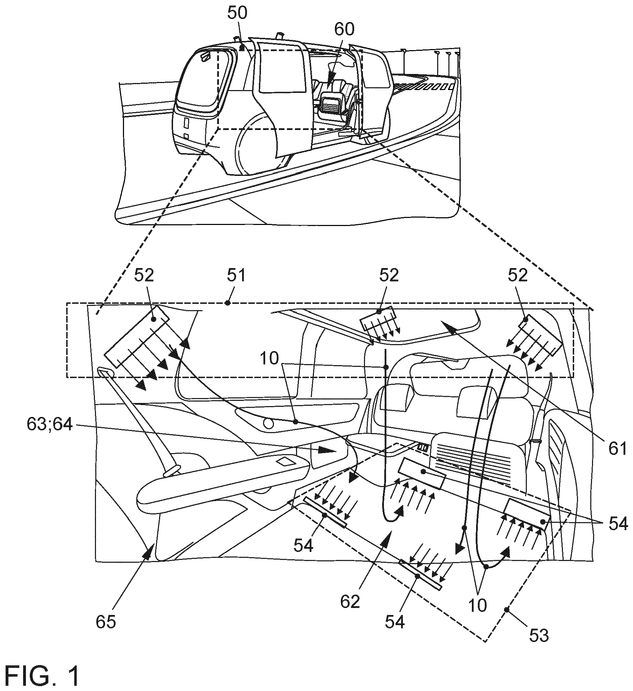

In Fig. 1 ist eine schematische Darstellung einer Ausführungsform des Fahrzeugs 50 gezeigt. Das Fahrzeug 50 umfasst eine Lufteinlasseinrichtung 51 mit Lufteinlässen 52 an einem Fahrzeugdach 61 zum Einblasen von Luft in einen Innenraum 60 des Fahrzeugs 50. Ferner umfasst das Fahrzeug 50 eine Luftabsaugeinrichtung 53 mit an einem Fahrzeugboden 62 angeordneten Luftauslässen 54 zum Absaugen von Luft aus dem Innenraum 60 des Fahrzeugs 50.

Die Lufteinlasseinrichtung 51 und die Luftabsaugeinrichtung 53 sind hierbei derart ausgebildet, dass durch Einblasen und Absaugen von Luft Schmutzpartikel und/oder Staub aus dem Innenraum 60 des Fahrzeugs 50 durch die Luftauslässe 54 hindurch mittels eines Luftstroms 10 entfernt werden können. Hierbei können sowohl laminare als auch turbulente Effekte ausgenutzt werden, um die Schmutzpartikel und den Staub zu lösen und abzutransportieren. Beispielsweise können an Oberflächen haftende Schmutzpartikel und Staub durch Aufwirbeln in den Luftstrom 10 transportiert, von diesem aufgenommen und anschließend mit diesem durch die Luftauslässe 54 aus dem Innenraum 60 des Fahrzeugs 50 transportiert werden.

Es kann vorgesehen sein, dass zumindest ein Lufteinlass 52 und/oder zumindest ein Luftauslass 54 in einem Ablagefach 63 oder an einer Ablagefläche 64 oder einer Schmutzsammelstelle 65 des Fahrzeugs 50 angeordnet sind, um dort gezielt Schmutzpartikel und/oder Staub zu entfernen.

Ferner kann vorgesehen sein, dass die Lufteinlasseinrichtung 51 und die Luftabsaugeinrichtung 53 jeweils mindestens eine Strömungsmaschine umfassen. Die mindestens eine Strömungsmaschine kann beispielsweise als Ventilator oder als Verdichter ausgebildet sein.

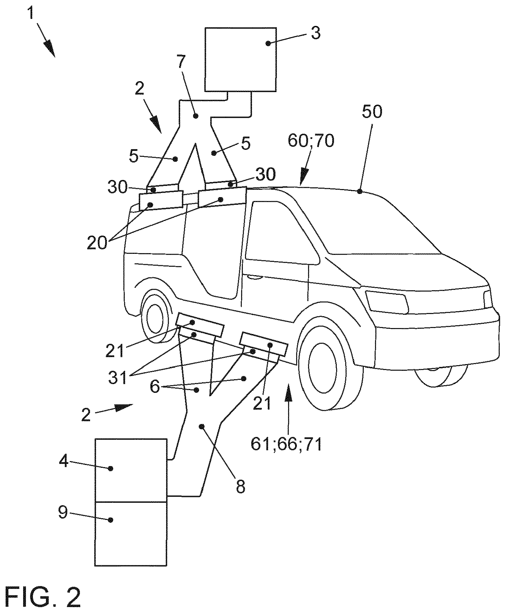

Es kann ferner alternativ oder zusätzlich vorgesehen sein, dass die Lufteinlasseinrichtung 51 und/oder die Luftabsaugeinrichtung 53 Koppelschnittstellen aufweisen, wobei die Koppelschnittstellen derart ausgebildet sind, dass zum Reinigen eine Verbindung zwischen dem Fahrzeug 50 und mindestens einer außerhalb des Fahrzeugs 50 angeordneten Strömungsmaschine, insbesondere einer hierfür vorgesehenen Versorgungseinrichtung 2, vgl. Fig. 2, hergestellt werden kann.

In Fig. 2 ist eine schematische Darstellung einer Ausführungsform des Systems 1 gezeigt. Das System 1 umfasst ein Fahrzeug 50 und eine Versorgungsvorrichtung 2.

Das Fahrzeug 50 umfasst eine Lufteinlasseinrichtung mit mindestens einem Lufteinlass zum Einblasen von Luft in einen Innenraum des Fahrzeugs 50, eine Luftabsaugeinrichtung mit mindestens einem Luftauslass zum Absaugen von Luft aus dem Innenraum des Fahrzeugs, wobei die Lufteinlasseinrichtung und die Luftabsaugeinrichtung derart ausgebildet sind, dass durch Einblasen und Absaugen von Luft Schmutzpartikel und/oder Staub aus dem Innenraum des Fahrzeugs 50 durch den mindestens einen Luftauslass hindurch mittels eines Luftstroms entfernt werden können.

Es ist beim Fahrzeug 50 vorgesehen, dass die Lufteinlasseinrichtung zwei an einer Oberseite 70 bzw. Fahrzeugdach 60 des Fahrzeugs 50 angeordnete Koppelschnittstelle 20 aufweist. Ferner ist vorgesehen, dass die Luftabsaugeinrichtung ebenfalls zwei an einer Unterseite 71 bzw. einem Fahrzeugboden 61 des Fahrzeugs 50 angeordnete Koppelschnittstellen 21 aufweist. Die Koppelschnittstellen 20, 21 können zum Reinigen eine Verbindung zwischen dem Fahrzeug 50 und außerhalb des Fahrzeugs 50 angeordneten Strömungsmaschinen 3, 4 der Versorgungseinrichtung 2 herstellen.

Die Versorgungsvorrichtung 2 umfasst zwei Strömungsmaschinen 3, 4 und einen Roboter 11 mit Führungsmitteln 7, 8, die als Führungsarme ausgebildet sind. Die Versorgungsvorrichtung 2 weist zu den Koppelschnittstellen 20, 21 des Fahrzeugs 50 komplementär ausgebildete Koppelschnittstellen 30, 31 auf. Die Koppelschnittstellen 20, 21, 30, 31 sind beispielsweise als komplementäre Steck-, Rast- oder Schraubverbindungen ausgebildet, welche ein schnelles Verbinden und Lösen der Verbindung ermöglichen.

Die Strömungsmaschinen 3, 4 sind beispielsweise als leistungsstarke Ventilatoren ausgebildet. Die Strömungsmaschinen 3, 4 sind über flexible Rohr- und/oder Schlauchverbindungen 5, 6 mit den Koppelschnittstellen 30, 31 verbunden. Die Strömungsmaschine 3 ist derart angeordnet und wird derart betrieben, dass im Innenraum des Fahrzeugs 50 durch Einblasen von Luft ein Überdruck erzeugt werden kann. Die Strömungsmaschine 4 ist derart angeordnet und wird derart betrieben, dass im Innenraum des Fahrzeugs 50 durch Absaugen von Luft ein Unterdruck erzeugt werden kann. Zusammenwirkend erzeugen die Strömungsmaschinen 3, 4 durch das Einblasen und das Absaugen einen durch den Innenraum des Fahrzeugs fließenden Luftstrom. Dieser Luftstrom löst Schmutzpartikel und/oder Staub von Oberflächen und nimmt die gelösten Schmutzpartikel und/oder den Staub mit sich aus dem Innenraum des Fahrzeugs 50 heraus.

Zum Reinigen des Fahrzeugs 50 fährt das Fahrzeug 50, insbesondere vollautomatisiert, beispielsweise in ein vollautomatisiertes Servicezentrum. Das Servicezentrum stellt die Versorgungsvorrichtung 2 bereit. Im Servicezentrum fährt das Fahrzeug 50 auf eine vorgegebene Position. An dieser Position werden die Koppelschnittstellen 30, 31 der Versorgungvorrichtung 2 mit den Koppelschnittstellen 20, 21 des Fahrzeugs 50 verbunden.

Dies erfolgt mittels der Führungsmittel 7, 8 des Roboters 11 der Versorgungsvorrichtung 2, welche vollautomatisiert und gesteuert die Steck-, Rast- oder Schraubverbindung hergestellt und die Koppelschnittstellen 20, 21, 30, 31 hierdurch miteinander verbindet. Anschließend erfolgt das Reinigen des Innenraums des Fahrzeugs 50, indem die Strömungsmaschinen 3, 4 gestartet und betrieben werden. Hierdurch wird der bereits beschriebene Luftstrom 10 (vgl. Fig. 1) in dem Fahrzeug 50 erzeugt, welcher Schmutzpartikel und/oder Staub aufwirbelt und mit sich aus dem Fahrzeug 50 heraus transportiert.

Es kann vorgesehen sein, dass die Versorgungseinrichtung 2 einen Auffangbehälter 9 aufweist, mit dem die Schmutzpartikel und der Staub aus dem Luftstrom herausgefiltert und aufgefangen werden können.

Ist der Reinigungsvorgang beendet, so werden die Strömungsmaschinen gestoppt und der Roboter 11 löst mittels der Führungsmittel 7, 8 die Koppelverbindungen 20, 21, 30, 31 wieder. Anschließend verlässt das Fahrzeug 50 mit einem gereinigten Innenraum die vorgegebene Position im Servicezentrum und kann in gesäuberten Zustand wieder eingesetzt werden.

Die gezeigten Positionen der Kopplungsschnittstellen 20, 21, 30, 31 sind lediglich beispielhaft. Die Kopplungsschnittstellen 20, 21, 30, 31 können prinzipiell auch an anderen Positionen des Fahrzeugs 50 angeordnet sein, beispielsweise an einem Fahrzeugunterboden 66.

Es kann vorgesehen sein, dass der beschriebene Reinigungsvorgang auch während eines Waschvorgangs in einer Waschanlage durchgeführt wird, sodass das Fahrzeug 50 anschließend vollständig gereinigt ist.

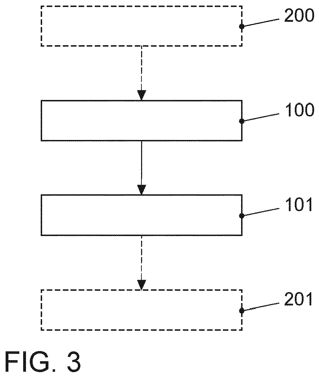

In Fig. 3 ist ein schematisches Ablaufdiagramm einer Ausführungsform des Verfahrens zum Reinigen eines Innenraums eines Fahrzeugs gezeigt.

In einem Verfahrensschritt 100 wird Luft in den Innenraum mittels mindestens einer Lufteinlasseinrichtung mit mindestens einem Lufteinlass eingeblasen. Dies erfolgt mittels einer Strömungsmaschine der Lufteinlasseinrichtung.

In einem Verfahrensschritt 101, der insbesondere auch zeitgleich mit dem Verfahrensschritt 100 ausgeführt werden kann, wird die eingeblasene Luft aus dem Innenraum mittels mindestens einer Luftabsaugeinrichtung mit mindestens einem Luftauslass abgesaugt. Dies erfolgt mittels einer Strömungsmaschine der Luftabsaugeinrichtung.

Durch den mittels des Einblasens und Absaugens erzeugten Luftstrom im Innenraum des Fahrzeugs werden Schmutzpartikel und Staub aus dem Innenraum des Fahrzeugs durch den mindestens einen Luftauslass hindurch entfernt.

Es kann vorgesehen sein, dass das Einblasen und/oder das Absaugen in gepulster Form erfolgen. Hierdurch kann eine Stärke des im Innenraum des Fahrzeugs erzeugten Luftstroms variiert werden, sodass Staub wiederholt aufgewirbelt und abgesaugt werden kann. Dies ermöglicht ein schnelleres Entfernen von Schmutzpartikeln und Staub aus dem Innenraum.

Es kann auch vorgesehen sein, dass das Einblasen und das Absaugen zeitversetzt erfolgen und/oder dass eine Stärke des Einblasens und/oder eine Stärke des Absaugens während des Reinigens verändert wird. Hierdurch kann der erzeugte Luftstroms in seiner Stärke variiert werden, sodass abwechselnd Staub aufgewirbelt und abgesaugt werden. Dies ermöglicht ein schnelleres Entfernen von Schmutzpartikeln und Staub aus dem Innenraum.

Es kann ferner in einem vor den Verfahrensschritten 100, 101 durchgeführten Verfahrensschritt 200 vorgesehen sein, dass zum Reinigen eine Verbindung zwischen dem Fahrzeug und mindestens einer außerhalb des Fahrzeugs angeordneten Strömungsmaschine mittels zumindest einer Koppelschnittstelle hergestellt wird und der Luftstrom alternativ ausschließlich mittels der mindestens einen außerhalb des Fahrzeugs angeordneten Strömungsmaschine erzeugt wird. Insbesondere können hierbei sowohl eine Strömungsmaschine mit der Lufteinlasseinrichtung des Fahrzeugs als auch eine weitere Strömungsmaschine mit der Luftabsaugeinrichtung über jeweilige Koppelschnittstellen verbunden werden. Das Erzeugen des Luftstroms erfolgt dann ausschließlich über die außerhalb des Fahrzeugs angeordneten Strömungsmaschinen. Hierdurch können die Lufteinlasseinrichtung und die Luftabsaugeinrichtung im Fahrzeug selbst einfach und kompakt und daher kostengünstig ausgebildet sein.

Nach dem Reinigen werden die Verbindungen in Verfahrensschritt 201 wieder gelöst.

Es kann in den Verfahrensschritten 200, 201 ferner vorgesehen sein, dass die Verbindung automatisiert mittels eines Roboters hergestellt und anschließend wieder gelöst wird. Hierzu weist der Roboter beispielsweise als Führungsarme ausgebildete Führungsmittel auf, welche vollautomatisiert die Koppelschnittstellen miteinander verbinden können, beispielsweise indem diese die jeweils komplementären Koppelschnittstellen am Fahrzeug identifizieren und die jeweils zugehörigen Koppelschnittstellen der Versorgungsrichtung mit diesen verbinden bzw. nach dem Reinigen von diesen Lösen.

### Bezugszeichenliste

- 1: System
- 2: Versorgungsvorrichtung
- 3: Strömungsmaschine
- 4: Strömungsmaschine
- 5: Rohr-/Schlauchverbindung
- 6: Rohr-/Schlauchverbindung
- 7: Führungsmittel
- 8: Führungsmittel
- 9: Auffangbehälter
- 10: Luftstrom
- 11: Roboter
- 20: Koppelschnittstelle (Lufteinlasseinrichtung)
- 21: Koppelschnittstelle (Luftabsaugeinrichtung)
- 30: Koppelschnittstelle (Versorgungsvorrichtung)
- 31: Koppelschnittstelle (Versorgungsvorrichtung)
- 50: Fahrzeug
- 51: Lufteinlasseinrichtung
- 52: Lufteinlass
- 53: Luftabsaugeinrichtung
- 54: Luftauslass
- 60: Innenraum
- 61: Fahrzeugdach
- 62: Fahrzeugboden
- 63: Ablagefach
- 64: Ablagefläche
- 65: Schmutzsammelstelle
- 66: Fahrzeugunterboden
- 70: Oberseite
- 71: Unterseite
- 100-101: Verfahrensschritte
- 200-201: Verfahrensschritte

## Patentansprüche

1. Verfahren zum Reinigen eines Innenraums (60) eines Fahrzeugs (50), umfassend die folgenden Schritte:
Einblasen von Luft in den Innenraum (60) mittels mindestens einer Lufteinlasseinrichtung (51) mit mindestens einem Lufteinlass (52),
Absaugen der eingeblasenen Luft aus dem Innenraum (60) mittels mindestens einer Luftabsaugeinrichtung (53) mit mindestens einem Luftauslass (54), sodass Schmutzpartikel und/oder Staub aus dem Innenraum (60) des Fahrzeugs (50) durch den mindestens einen Luftauslass (54) hindurch mittels eines Luftstroms (10) entfernt werden, wobei der Luftstrom (10) zumindest zeitweise ausschließlich in bestimmte Bereiche des Innenraums (60) des Fahrzeugs (50) geleitet wird, wobei der mindestens eine Lufteinlass (52) und/oder der mindestens eine Luftauslass (54) hierzu richtungsabhängig betrieben werden, sodass Schmutzpartikel und/oder Staub durch den Innenraum (60) hindurch gezielt auf den mindestens einen Luftauslass (54) hingetrieben werden.

2. Verfahren nach Anspruch 1, wobei das Einblasen und/oder das Absaugen in gepulster Form erfolgen.

3. Verfahren nach Anspruch 1 oder 2, wobei das Einblasen und das Absaugen zeitversetzt erfolgen und/oder dass eine Stärke des Einblasens und/oder eine Stärke des Absaugens während des Reinigens verändert wird.

4. Verfahren nach einem der vorangegangenen Ansprüche, wobei zum Reinigen eine Verbindung zwischen dem Fahrzeug (50) und mindestens einer außerhalb des Fahrzeugs (50) angeordneten Strömungsmaschine (3, 4) mittels zumindest einer Koppelschnittstelle (20, 21) hergestellt wird und der Luftstrom (10) mittels der mindestens einen außerhalb des Fahrzeugs (50) angeordneten Strömungsmaschine (3, 4) erzeugt wird.

5. Verfahren nach Anspruch 4, wobei die Verbindung automatisiert mittels eines Roboters (11) hergestellt und/oder nach dem Reinigen wieder gelöst wird.

6. Fahrzeug (50), umfassend:
eine Lufteinlasseinrichtung (51) mit mindestens einem Lufteinlass (52) zum Einlassen von Luft in einen Innenraum (60) des Fahrzeugs (50),
eine Luftabsaugeinrichtung (53) mit mindestens einem Luftauslass (54) zum Absaugen von Luft aus dem Innenraum (60) des Fahrzeugs (50),
wobei die Lufteinlasseinrichtung (51) und die Luftabsaugeinrichtung (53) derart ausgebildet sind, dass durch Einblasen und Absaugen von Luft Schmutzpartikel und/oder Staub aus dem Innenraum (60) des Fahrzeugs (50) durch den mindestens einen Luftauslass (54) hindurch mittels eines Luftstroms (10) entfernt werden können,
wobei die Lufteinlasseinrichtung (51) und/oder die Luftabsaugeinrichtung (53) ferner derart ausgebildet sind, dass der Luftstrom (10) zumindest zeitweise ausschließlich in bestimmte Bereiche des Innenraums (60) des Fahrzeugs (50) geleitet wird, wobei der mindestens eine Lufteinlass (52) und/oder der mindestens eine Luftauslass (54) hierzu derart ausgebildet sind, richtungsabhängig betrieben zu werden, sodass Schmutzpartikel und/oder Staub durch den Innenraum (60) hindurch gezielt auf den mindestens einen Luftauslass (54) hingetrieben werden.

7. Fahrzeug (50) nach Anspruch 6, wobei zumindest ein Lufteinlass (52) und/oder zumindest ein Luftauslass (54) in einem Ablagefach (63) oder an einer Ablagefläche (64) oder einer Schmutzsammelstelle (65) des Fahrzeugs (50) angeordnet sind.

8. Fahrzeug (50) nach Anspruch 6 oder 7, wobei die Lufteinlasseinrichtung (51) und die Luftabsaugeinrichtung (53) jeweils mindestens eine Strömungsmaschine (3, 4) umfassen.

9. Fahrzeug (50) nach einem der Ansprüche 6 bis 8, wobei die Lufteinlasseinrichtung (51) und/oder die Luftabsaugeinrichtung (53) Koppelschnittstellen (20, 21) aufweisen, wobei die Koppelschnittstellen (20, 21) derart ausgebildet sind, dass zum Reinigen eine Verbindung zwischen dem Fahrzeug (50) und mindestens einer außerhalb des Fahrzeugs (50) angeordneten Strömungsmaschine (3, 4) hergestellt werden kann.

10. Versorgungsvorrichtung (2), umfassend mindestens eine Strömungsmaschine (3, 4), wobei die Versorgungsvorrichtung (2) mindestens eine Koppelschnittstelle (30, 31) aufweist, die derart ausgebildet ist, dass diese die mindestens eine Strömungsmaschine (3, 4) zum Reinigen eines Innenraums (60) eines Fahrzeugs (50) gemäß Anspruch 9 mit den Koppelschnittstellen (20, 21) der Lufteinlasseinrichtung (51) und/oder der Luftabsaugeinrichtung (53) des Fahrzeugs (50) verbunden werden kann.

11. System (1) zum Reinigen eines Innenraums (60) eines Fahrzeugs (50), umfassend:
ein Fahrzeug (50) gemäß Anspruch 9 und
mindestens eine Versorgungsvorrichtung (2) gemäß Anspruch 10, wobei die mindestens eine Versorgungsvorrichtung (2) über die mindestens eine Koppelschnittstelle (30, 31) mit den Koppelschnittstellen (20, 21) der Lufteinlasseinrichtung (51) und/oder der Absaugeinrichtung (53) verbunden ist.

12. System (1) nach Anspruch 11, wobei das System (1) einen Roboter (11) umfasst, wobei der Roboter (11) Führungsmittel (7, 8) aufweist, wobei die Führungsmittel (7, 8) derart ausgebildet sind, eine Verbindung der Koppelschnittstellen (20, 21, 30, 31) automatisiert herstellen und/oder nach dem Reinigen wieder lösen zu können.

## Claims

1. Method for cleaning an interior (60) of a vehicle (50), comprising the following steps:
blowing air into the interior (60) by means of at least one air-admission device (51) with at least one air inlet (52),
extracting the blown-in air by suction from the interior (60) by means of at least one air suction-extraction device (53) with at least one air outlet (54) such that dirt particles and/or dust are removed from the interior (60) of the vehicle (50) through the at least one air outlet (54) by means of an air stream (10), wherein the air stream (10) is at least intermittently guided exclusively into specific regions of the interior (60) of the vehicle (50), wherein, for this purpose, the at least one air inlet (52) and/or the at least one air outlet (54) are/is operated in a direction-dependent manner such that dirt particles and/or dust are driven in a targeted manner to the at least one air outlet (54) through the interior (60).

2. Method according to Claim 1, wherein the blowing-in and/or the suction-extraction are/is realized in pulsed form.

3. Method according to Claim 1 or 2, wherein the blowing-in and the suction-extraction are realized in a time-offset manner, and/or in that a blowing-in intensity and/or a suction-extraction intensity are/is varied during the cleaning.

4. Method according to one of the preceding claims, wherein, for cleaning purposes, a connection between the vehicle (50) and at least one turbomachine (3, 4) arranged outside the vehicle (50) is produced by means of at least one coupling interface (20, 21) and the air stream (10) is generated by means of the at least one turbomachine (3, 4) arranged outside the vehicle (50).

5. Method according to Claim 4, wherein the connection is produced, and/or released again after the cleaning, in an automated manner by means of a robot (11) .

6. Vehicle (50) comprising:
an air-admission device (51) with at least one air inlet (52) for admitting air into an interior (60) of the vehicle (50),
an air suction-extraction device (53) with at least one air outlet (54) for extracting air by suction from the interior (60) of the vehicle (50),
wherein the air-admission device (51) and the air suction-extraction device (53) are configured in such a way that, by blowing-in and suction-extraction of air, dirt particles and/or dust can be removed from the interior (60) of the vehicle (50) through the at least one air outlet (54) by means of an air stream (10),
wherein the air-admission device (51) and/or the air suction-extraction device (53) are furthermore configured in such a way that the air stream (10) is at least intermittently guided exclusively into specific regions of the interior (60) of the vehicle (50), wherein, for this purpose, the at least one air inlet (52) and/or the at least one air outlet (54) are/is configured to be operated in a direction-dependent manner such that dirt particles and/or dust are driven in a targeted manner to the at least one air outlet (54) through the interior (60) .

7. Vehicle (50) according to Claim 6, wherein at least one air inlet (52) and/or at least one air outlet (54) are/is arranged in a storage compartment (63) or on a storage surface (64) or at a dirt-collecting place (65) of the vehicle (50).

8. Vehicle (50) according to Claim 6 or 7, wherein the air-admission device (51) and the air suction-extraction device (53) each comprise at least one turbomachine (3, 4).

9. Vehicle (50) according to one of Claims 6 to 8, wherein the air-admission device (51) and/or the air suction-extraction device (53) have/has coupling interfaces (20, 21), wherein the coupling interfaces (20, 21) are configured in such a way that, for cleaning purposes, a connection between the vehicle (50) and at least one turbomachine (3, 4) arranged outside the vehicle (50) can be produced.

10. Supply apparatus (2) comprising at least one turbomachine (3, 4), wherein the supply apparatus (2) has at least one coupling interface (30, 31) which is configured in such a way that, for the purposes of cleaning an interior (60) of a vehicle (50) according to Claim 9, it can connect the at least one turbomachine (3, 4) to the coupling interfaces (20, 21) of the air-admission device (51) and/or of the air suction-extraction device (53) of the vehicle (50).

11. System (1) for cleaning an interior (60) of a vehicle (50), comprising:
a vehicle (50) according to Claim 9, and
at least one supply apparatus (2) according to Claim 10, wherein the at least one supply apparatus (2) is coupled via the at least one coupling interface (30, 31) to the coupling interfaces (20, 21) of the air-admission device (51) and/or of the suction-extraction device (53).

12. System (1) according to Claim 11, wherein the system (1) comprises a robot (11), wherein the robot (11) has guide means (7, 8), wherein the guide means (7, 8) are configured to be able to produce a connection of the coupling interfaces (20, 21, 30, 31), and/or to release said connection again after the cleaning, in an automated manner.

## Revendications

1. Procédé de nettoyage d'un habitacle (60) d'un véhicule (50), comprenant les étapes suivantes :
insufflation d'air dans l'habitacle (60) au moyen d'au moins un dispositif d'entrée d'air (51) ayant au moins une entrée d'air (52),
aspiration de l'air insufflé hors de l'habitacle (60) au moyen d'au moins un dispositif d'aspiration d'air (53) ayant au moins une sortie d'air (54), de sorte que les particules de saleté et/ou la poussière sont éliminées de l'habitacle (60) du véhicule (50) à travers l'au moins une sortie d'air (54) au moyen d'un flux d'air (10), le flux d'air (10) étant dirigé au moins temporairement exclusivement dans des zones déterminées de l'habitacle (60) du véhicule (50), l'au moins une entrée d'air (52) et/ou l'au moins une sortie d'air (54) étant actionnées à cet effet en fonction de la direction, de sorte que des particules de saleté et/ou de la poussière sont propulsées à travers l'habitacle (60) de manière ciblée vers l'au moins une sortie d'air (54).

2. Procédé selon la revendication 1, dans lequel l'insufflation et/ou l'aspiration sont réalisées sous forme pulsée.

3. Procédé selon la revendication 1 ou 2, dans lequel l'insufflation et l'aspiration sont décalées dans le temps et/ou en ce qu'une intensité de l'insufflation et/ou une intensité de l'aspiration est modifiée pendant le nettoyage.

4. Procédé selon l'une des revendications précédentes, dans lequel, pour le nettoyage, on établit une liaison entre le véhicule (50) et au moins une turbomachine (3, 4) disposée à l'extérieur du véhicule (50) au moyen d'au moins une interface de raccordement (20, 21) et on génère le flux d'air (10) au moyen de l'au moins une turbomachine (3, 4) disposée à l'extérieur du véhicule (50).

5. Procédé selon la revendication 4, dans lequel la connexion est établie de manière automatisée au moyen d'un robot (11) et/ou est à nouveau supprimée après le nettoyage.

6. Véhicule (50) comprenant :
un dispositif d'entrée d'air (51) ayant au moins une entrée d'air (52) pour faire entrer de l'air dans un habitacle (60) du véhicule (50),
un dispositif d'extraction d'air (53) avec au moins une sortie d'air (54) pour extraire l'air de l'intérieur (60) du véhicule (50),
le dispositif d'entrée d'air (51) et le dispositif d'aspiration d'air (53) étant conçus de telle sorte que, par soufflage et aspiration d'air, des particules de saleté et/ou de la poussière sont aptes à être éliminées de l'habitacle (60) du véhicule (50) à travers l'au moins une sortie d'air (54) au moyen d'un courant d'air (10),
le dispositif d'entrée d'air (51) et/ou le dispositif d'aspiration d'air (53) étant en outre configurés de telle sorte que le flux d'air (10) est dirigé au moins temporairement exclusivement dans certaines zones de l'habitacle (60) du véhicule (50), l'au moins une entrée d'air (52) et/ou l'au moins une sortie d'air (54) étant à cet effet configurées de telle sorte qu'elles fonctionnent en fonction de la direction, de sorte que des particules de saleté et/ou de la poussière sont entraînées à travers l'habitacle (60) de manière ciblée vers l'au moins une sortie d'air (54).

7. Véhicule (50) selon la revendication 6, dans lequel au moins une entrée d'air (52) et/ou au moins une sortie d'air (54) sont disposées dans un compartiment de rangement (63) ou sur une surface de rangement (64) ou un point de collecte de saletés (65) du véhicule (50).

8. Véhicule (50) selon la revendication 6 ou 7, dans lequel le dispositif d'entrée d'air (51) et le dispositif d'extraction d'air (53) comprennent chacun au moins une turbomachine (3, 4).

9. Véhicule (50) selon l'une quelconque des revendications 6 à 8, dans lequel le dispositif d'entrée d'air (51) et/ou le dispositif d'extraction d'air (53) comportent des interfaces de raccordement (20, 21), les interfaces de raccordement (20, 21) étant configurées de manière à pouvoir établir une liaison entre le véhicule (50) et au moins une turbomachine (3, 4) disposée à l'extérieur du véhicule (50) pour le nettoyage.

10. Dispositif d'alimentation (2) comprenant au moins une turbomachine (3, 4), le dispositif d'alimentation (2) présentant au moins une interface de raccordement (30, 31) qui est configurée de manière à être apte à relier l'au moins une turbomachine (3, 4) aux interfaces de raccordement (20, 21) du dispositif d'entrée d'air (51) et/ou du dispositif d'aspiration d'air (53) du véhicule (50) pour nettoyer un habitacle (60) d'un véhicule (50) selon la revendication 9.

11. Système (1) de nettoyage de l'habitacle (60) d'un véhicule (50), comprenant :
un véhicule (50) selon la revendication 9 et au moins un dispositif d'alimentation (2) selon la revendication 10, ledit au moins un dispositif d'alimentation (2) étant connecté aux interfaces de raccordement (20, 21) du dispositif d'entrée d'air (51) et/ou du dispositif d'aspiration (53) via l'au moins une interface de raccordement (30, 31).

12. Système (1) selon la revendication 11, dans lequel le système (1) comprend un robot (11), le robot (11) présentant des moyens de guidage (7, 8), les moyens de guidage (7, 8) étant configurés de manière à pouvoir établir une liaison des interfaces de raccordement (20, 21, 30, 31) de manière automatisée et/ou à pouvoir la supprimer après le nettoyage.
